# EUROPEAN PATENT SPECIFICATION

(11) **EP 1 410 506 B1**
(45) Date of publication and mention of the grant of the patent: **14.12.2005**
(21) Application number: 00952801.9
(22) Date of filing: 24.08.2000
(51) Int. Cl.: H03K 17/56, H03K 17/68

(54) **A BIDIRECTIONAL BIPOLAR TRANSISTOR SWITCH ARRANGEMENT**
BIDIREKTIONALE BIPOLARTRANSISTOR-SCHALTANORDNUNG
COMMUTATEUR BIDIRECTIONNEL A TRANSISTOR BIPOLAIRE

(30) Priority: 14.10.1999 AU 5401499; 23.12.1999 AU PQ480699
(43) Date of publication of application: 21.04.2004
(73) Proprietor: ALCATEL, 75008 Paris (FR)
(72) Inventor: ORR, Bruce, Francis, Balgowlah, NSW 2093 (AU)
(74) Representative: Brose, Gerhard
(86) International application number: PCT/AU2000/000994
(87) International publication number: WO 2001/028095

(56) References cited:
- SU-A- 712 967
- US-A- 5 006 734
- US-A- 5 349 242
- US-A- 5 608 237

## Description

### Field of Invention

This invention relates to a bidirectional bipolar transistor switch arrangement for use in customer end telecommunications equipment connected to a telephone line whose line feed polarity can be either positive or negative. In such communications equipment it may be necessary to provide a line powered switch to switch low level AC signals to an ancillary circuit element, when the telephone line current is present.

For such a purpose it is known to use contacts of an electro-magnetic relay whose coil is incorporated in the telephone line loop. Such an arrangement is described in our co-pending Australian Pat. Appl. No.36813/99, in which contacts of a line current sensing relay cause a capacitor to be inserted into a filter when an associated telephone is brought into an off-hook mode, to alter the characteristics of the filter.

There are, however, several disadvantages associated with relays, including reed relays, when used for this purpose. A major disadvantage is that such relays are barely sensitive enough for reliable operation at low current values, typically 20 to 50mA. This is because the relay coil is serially connected in the line loop and its coil resistance therefore needs to be relatively low. Consequently the number of turns in the coil is small. Another disadvantage is that of contact unreliability. Further, the fast rise time of current when the contacts of the relay close may cause errors in some forms of signal transmission such as ADSL transmission.

It is also known to use JFET transistors for switching AC signals. While the drain/source of a JFET transistor is capable of conducting current in both directions, a control voltage must be applied to the transistor's gate of a polarity that matches the JFET type (P-channel, N-channel). Generating a unipolar control voltage when the line feed polarity can be either positive or negative is difficult. Although two JFETs could be used, the relatively high turn-on voltage of JFETs make them less attractive for this application.

Another known AC switch is an optically coupled MOS switch, sometimes known as a MOS optocoupler. While this type of switch can also handle low level AC signals, its operating LED is typically unipolar which requires a rectifier bridge if the device is to operate with a line-feed polarity of either polarity. Such a rectifier bridge is disadvantageous in that it introduces a relatively high voltage drop. Further, this type of switch is relatively expensive.

### Summary of Invention

It is therefore an object of the present invention to provide a low cost bidirectional line powered bipolar transistor switch arrangement that can reliably operate at low current values, and can operate with a line-feed polarity of either polarity without the need for a polarity guard.

According to the invention there is provided a bidirectional bipolar transistor switch arrangement comprising a current sensing resistance means of predetermined value connected between a first node and a second node, a first bipolar transistor whose base element is connected to said first node and whose emitter element is connected to said second node, and a second bipolar transistor whose base element is connected to said second node and whose emitter element is connected to said first node, the first and second bipolar transistor's respective collector elements being connected together at a third node, said switch arrangement's connection means being formed by said second node and said third node, whereby when direct current is caused to flow between said first node and said second node through said current sensing resistance means to produce a voltage across the first and second nodes of a magnitude such that, depending on its polarity, either said first said transistor or said second transistor is turned on thereby in a forward and reverse conduction mode, thereby providing an AC conducting path between said connection means via the turned on transistor's emitter/collector junction.

### Brief Description of Drawings

In order that the invention may be readily carried into effect embodiments thereof will now be described in relation to the accompanying drawings, in which:
Figure 1 shows a schematic circuit diagram of the bipolar transistor switch arrangement of the present invention;
Figure 2 shows a schematic circuit diagram of an ADSL in-line filter incorporating the bipolar switch arrangement of the present invention.
Figure 3 shows a further embodiment of the switch arrangement shown in Figure 1.

### Detailed Description

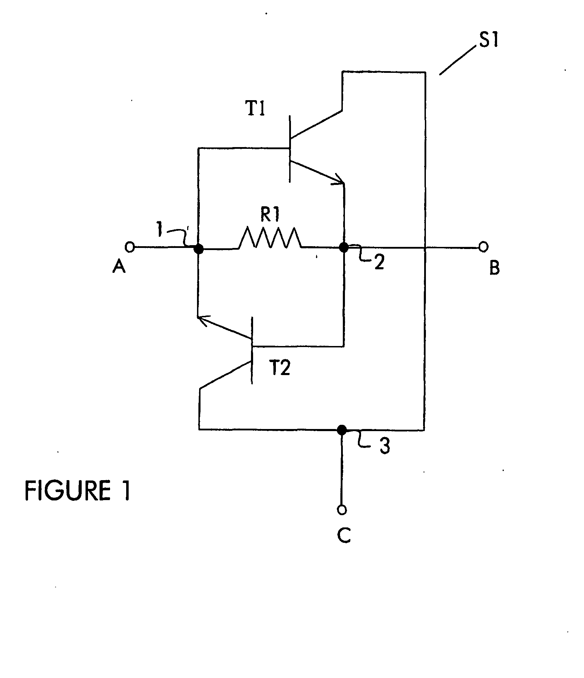

Referring to Figure 1, the switch arrangement S1 of the present invention comprises two NPN transistors T1 and T2, a current sensing resistor R1, and three circuit connecting nodes 1,2 and 3 respectively connected to three switch connecting points A, B and C.

It will be understood that PNP transistors could be substituted for the NPN transistors shown.

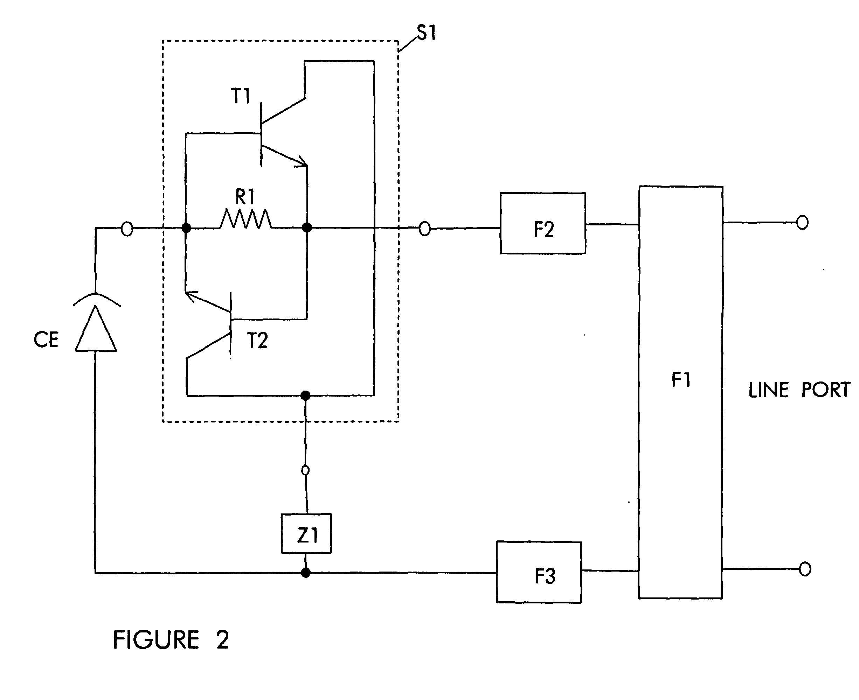

Referring to Figure 2, Customer Equipment (CE) eg, a telephone is connected to an ADSL line port L1 - L2 via an in-line filter arrangement comprising a second order filter F1 and two series impedance correction stages F2 and F3. A shunt impedance stage Z1 is switched into circuit by switch arrangement S1 of the present invention when telephone CE is brought into the off-hook mode causing loop current to flow through the current sensing resistor R1. The operation of the in-line filter and its associated shunt impedance stage Z1 is described in the specification of our co-pending Australian Patent Application No.54014/99.

The operating current threshold of the switch arrangement S1 is determined by the value of resistor R1. With a typical resistance of 120 ohms this current threshold is approximately 5 mA which produces a voltage drop of 0.6 volts. This voltage drop turns on either transistor T1 or transistor T2 depending on the polarity of the loop current. It should be noted that only one of the transistors is active for a given loop current polarity.

The active transistor is operated in an unusual mode in that there is no DC current in the collector, and both forward and reverse conduction modes are used. In the reverse conduction mode a negative collector voltage, with respect to emitter voltage, enables a negative current flow from collector to emitter (conventional current flow is from emitter to collector). This reverse conduction is necessary to conduct the negative part of an AC signal switched through the active transistor to the shunt impedance stage Z1. In order to ensure that the active transistor can conduct at least 2mA of AC signal while remaining in saturation a relatively large base current is supplied by choosing the value of sensing resistor R1 to provide a base current of approximately 1 mA at loop currents above 10mA.

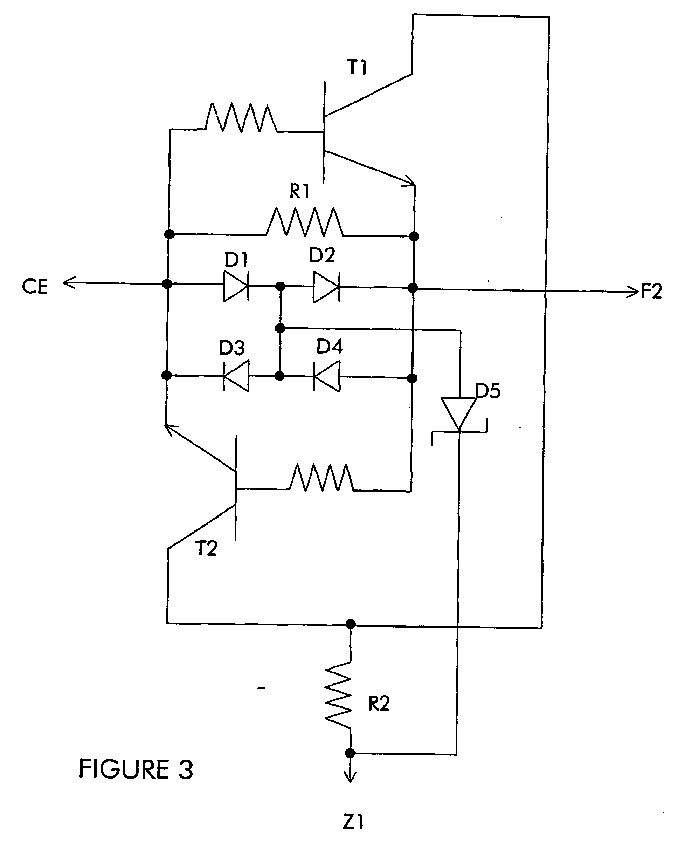

Referring to Figure 3, the switch arrangement in this preferred embodiment includes a high voltage protection circuit in the form of a pair of serially connected diodes D1-D2 operatively connected across the base/emitter elements of transistor T1, a pair of diodes D3-D4 similarly connected across the base/emitter elements of transistor T2, and a zener diode D5 operatively connected to the collectors of the transistors.

Diodes D1, D2, D3 and D4 are arranged to protect the base/emitter circuits of the transistors, and diode D5, which is a surge arrestor type zener, is arranged to protect the collectors of the transistors.

The switch arrangement of the present invention may be integrated into a module with the in-line filter elements to be interposed between the telephone and the line port.

Alternately, the switch arrangement elements and the in-line filter elements can be incorporated in the telephone.

The switch arrangement of the present invention may be used in other customer equipment such as, for example, facsimile equipment.

A plurality of switch arrangements of the present invention may be adapted to switch a plurality of circuit elements in a circuit arrangement.

## Claims

1. A bidirectional bipolar transistor switch arrangement comprising a current sensing resistance means of predetermined value connected between a first node and a second node, a first bipolar transistor whose base element is connected to said first node and whose emitter element is connected to said second node, and a second bipolar transistor whose base element is connected to said second node and whose emitter element is connected to said first node, the first and second bipolar transistor's respective collector elements being connected together at a third node, said switch arrangement's connection means being formed by said second node and said third node, whereby when direct current is caused to flow between said first node and said second node through said current sensing resistance means to produce a voltage across the first and second nodes of a magnitude such that, depending on its polarity, either said first said transistor or said second transistor is turned on thereby in a forward and reverse conduction mode, thereby providing an AC conducting path between said connection means via the turned on transistor's emitter/collector junction.

2. A bidirectional bipolar switch arrangement as claimed in claim 1, wherein said direct current is loop current of a telephone line.

3. A bidirectional bipolar switch arrangement as claimed in claim 1 or 2, wherein said AC conducting path provided by said turned on transistor switches at least one circuit element.

4. A bidirectional bipolar switch arrangement as claimed in claim 3, wherein said at least one circuit element comprises a complex impedance network.

5. A bidirectional bipolar switch arrangement as claimed in claim 3, wherein said at least one circuit element is a capacitor.

6. A bidirectional bipolar switch arrangement as claimed in any one of the preceding claims, wherein said first transistor and said second transistor are of the NPN type.

7. A bidirectional bipolar switch arrangement as claimed in any one of claims 1 to 5, wherein said first transistor and said second transistor are of the PNP type.

8. A bidirectional bipolar switch arrangement as claimed in any one the preceding claims, including voltage protection means.

9. An ADSL in-line filter arrangement operatively incorporating at least one bidirectional bipolar switch arrangement as claimed in any one of the preceding claims.

10. An ADSL in-line filter arrangement as claimed in claim 9, incorporated in customer equipment means.

11. An ADSL in-line filter arrangement as claimed in claim 10, wherein said customer equipment means is a telephone.

12. An ADSL in-line filter arrangement as claimed in claim 10, wherein said customer equipment means is a facsimile device.

## Patentansprüche

1. Bidirektionale Bipolartransistor-Schaltanordnung, umfassend eine Strommesswiderstandsvorrichtung mit einem zuvor festgelegten Wert, welche zwischen einem ersten Knoten und einem zweiten Knoten verbunden ist, einen ersten Bipolartransistor, dessen Basiselement mit dem ersten Knoten verbunden ist und dessen Emitterelement mit dem zweiten Knoten verbunden ist, und ein zweiter Bipolartransistor, dessen Basiselement mit dem zweiten Knoten und dessen Emitterelement mit dem ersten Knoten verbunden ist, wobei die jeweiligen Kollektorelemente des ersten und zweiten Bipolartransistors zusammen an einem dritten Knoten verbunden sind und wobei die Verbindungsvorrichtung der Schaltanordnung von dem zweiten Knoten und von dem dritten Knoten gebildet wird; hierdurch wird, wenn ein Gleichstromfluss zwischen dem ersten Knoten und dem zweiten Knoten durch die Strommesswiderstandsvorrichtung verursacht wird, eine Spannung über den ersten und den zweiten Knoten in so einer Größenordnung erzeugt, dass in Abhängigkeit von ihrer Polarität entweder der erste Transistor oder der zweite Transistor **dadurch** in einem vorwärts oder rückwärts leitenden Modus eingeschaltet wird, wodurch eine Wechselstrombahn zwischen den Verbindungsvorrichtungen über den Emitter/ Kollektor-Übergang des eingeschalteten Transistors bereitgestellt wird.

2. Bidirektionale Bipolar-Schaltanordnung nach Anspruch 1, bei welcher der Gleichstrom der Schleifenstrom einer Telefonleitung ist.

3. Bidirektionale Bipolar-Schaftanordnung nach Anspruch 1 oder 2, bei welcher die von dem eingeschalteten Transistor bereitgestellte Wechselstrombahn mindestens ein Schaltungselement schaltet.

4. Bidirektionale Bipolar-Schaltanordnung nach Anspruch 3, bei welcher das mindestens eine Schaltungselement ein komplexes Impedanznetzwerk umfasst.

5. Bidirektionale Bipolar-Schaltanordnung nach Anspruch 3, bei welcher das mindestens eine Schaltungselement ein Kondensator ist.

6. Bidirektionale Bipolar-Schaltanordnung nach einem der vorhergehenden Ansprüche, bei welcher der erste Transistor und der zweite Transistor dem npn-Typ entsprechen.

7. Bidirektionale Bipolar-Schaltanordnung nach einem der Ansprüche 1 bis 5, bei welcher der erste Transistor und der zweite Transistor dem pnp-Typ entsprechen.

8. Bidirektionale Bipolar-Schaltanordnung nach einem der vorhergehenden Ansprüche, umfassend Spannungsschutzvorrichtungen.

9. ADSL-In-Line-Filteranordnung, im Betrieb umfassend mindestens eine bidirektionale Bipolar-Schaltanordnung nach einem der vorhergehenden Ansprüche.

10. ADSL-In-Line-Filteranordnung nach Anspruch 9, eingebaut in eine Teilnehmergerät-Vorrichtung.

11. ADSL-In-Line-Filteranordnung nach Anspruch 10, bei welcher die Teilnehmergerät-Vorrichtung ein Telefon ist

12. ADSL-In-Line-Filteranordnung nach Anspruch 10, bei welcher die Teilnehmergerät-Vorrichtung ein Telefaxgerät ist.

## Revendications

1. Dispositif de commutateur bidirectionnel à transistors bipolaires comprenant des moyens de résistance sensibles au courant de valeur prédéterminée connectés entre un premier noeud et un deuxième noeud, un premier transistor bipolaire dont l'élément de base est connecté au dit premier noeud et dont l'élément émetteur est connecté au dit deuxième noeud, et un deuxième transistor bipolaire dont l'élément de base est connecté au dit deuxième noeud et dont l'élément émetteur est connecté au dit premier noeud, les éléments collecteurs respectifs des premier et second transistors bipolaires étant connectés ensemble à un troisième noeud, lesdits moyens de connexion du dispositif de commutateur étant formés par ledit deuxième noeud et ledit troisième noeud, moyennant quoi lorsqu'un courant direct est amené à circuler entre ledit premier noeud et ledit deuxième noeud à travers lesdits moyens de résistance sensibles au courant afin de produire une tension traversant lesdits premier et deuxième noeuds d'une magnitude telle que, en fonction de sa polarité, soit ledit premier transistor ou soit ledit deuxième transistor est ainsi activé dans un mode de conduction directe ou en inverse, fournissant ainsi un chemin conducteur CA entre lesdits moyens de connexion par le biais de la jonction émetteur/collecteur du transistor activé.

2. Dispositif de commutateur bipolaire bidirectionnel selon la revendication 1, dans lequel ledit courant direct est un courant de boucle d'une ligne téléphonique.

3. Dispositif de commutateur bipolaire bidirectionnel selon la revendication 1 ou 2, dans lequel ledit chemin conducteur CA fourni par ledit transistor activé commute au moins un élément de circuit.

4. Dispositif de commutateur bipolaire bidirectionnel selon la revendication 3, dans lequel ledit au moins un élément de circuit comprend un réseau d'impédance complexe.

5. Dispositif de commutateur bipolaire bidirectionnel selon la revendication 3, dans lequel ledit au moins un élément de circuit est un condensateur.

6. Dispositif de commutateur bipolaire bidirectionnel selon l'une quelconque des revendications précédentes, dans lequel ledit premier transistor et ledit deuxième transistor sont de type NPN.

7. Dispositif de commutateur bipolaire bidirectionnel selon l'une quelconque des revendications 1 à 5, dans lequel ledit premier transistor et ledit deuxième transistor sont de type PNP.

8. Dispositif de commutateur bipolaire bidirectionnel selon l'une quelconque des revendications précédentes, incluant des moyens de protection de tension.

9. Dispositif de filtre en ligne ADSL incorporant de manière opératoire au moins un dispositif de commutateur bipolaire bidirectionnel selon l'une quelconque des revendications précédentes.

10. Dispositif de filtre en ligne ADSL selon la revendication 9, incorporé dans des moyens d'équipement de consommation.

11. Dispositif de filtre en ligne ADSL selon la revendication 10, dans lequel lesdits moyens d'équipement de consommation sont un téléphone.

12. Dispositif de filtre en ligne ADSL selon la revendication 10, dans lequel lesdits moyens d'équipement de consommation sont un appareil de télécopie.
